# FASCICULE DE BREVET EUROPEEN

(11) **EP 3 232 764 B1**
(45) Date de publication et mention de la délivrance du brevet: **18.04.2018**
(21) Numéro de dépôt: 15820219.2
(22) Date de dépôt: 07.12.2015
(51) Int. Cl.: A01D 34/535, B02C 18/18

(54) **DISPOSITIF DE FAUCHAGE OU DE BROYAGE**
MÄH- ODER ZERKLEINERUNGSVORRICHTUNG
MOWING OR GRINDING DEVICE

(30) Priorité: 16.12.2014 FR 1462479
(43) Date de publication de la demande: 25.10.2017
(73) Titulaire: Actibac, 54550 Maizières (FR)
(72) Inventeur: BACHMANN, Christophe, 54000 Nancy (FR)
(74) Mandataire: Loyer & Abello
(86) Numéro de dépôt international: PCT/FR2015/053353
(87) Numéro de publication internationale: WO 2016/097527

(56) Documents cités:
- EP-A1- 2 039 234
- FR-A1- 2 944 182
- GB-A- 1 102 517
- US-A1- 2004 155 131

## Description

### Domaine technique

L'invention se rapporte au domaine des dispositifs de fauchage ou de broyage.

De tels dispositifs de fauchage ou de broyage équipent notamment des machines pour la coupe et/ou le broyage des végétaux telles que les faucheuses rotatives utilisées pour la coupe des cultures, les épareuses utilisées pour l'entretien des espaces verts ou des accotements routiers.

### Arrière-plan technologique

Les dispositifs de fauchage ou de broyage comportent un arbre rotatif portant des outils travaillant à la manière de fléaux au cours de la rotation de l'arbre. L'arbre rotatif est équipé des chapes positionnées perpendiculairement à son axe et portant des supports axiaux, disposés parallèlement à l'axe de l'arbre rotatif, et supportant les outils. Les outils peuvent être directement montés sur les supports axiaux. Dans ce cas, les outils sont chacun équipés d'un orifice de montage au travers duquel passe un des supports axiaux. Les outils peuvent également être montés sur les supports axiaux par l'intermédiaire de manilles. Dans ce cas, chaque manille comporte, d'une part, des orifices de montage au travers desquelles passe un support axial porté par des chapes solidaires de l'arbre rotatif et, d'autre part, un support axial passant au travers d'un orifice de montage de l'outil. Ces montages sont réalisés de manière à ce que les outils et les manilles puissent tourner librement par rapport aux supports axiaux.

Ainsi, d'une part, lorsque l'arbre rotatif est entraîné en rotation, l'outil est apte à se disposer dans une position de travail dans laquelle il s'étend radialement par rapport à l'arbre rotatif sous l'action de la force centrifuge. D'autre part, les outils peuvent s'escamoter par la rotation de la manille et/ou la rotation de l'outil de sorte à s'écarter de leur position de travail lorsqu'ils entrent en contact avec des obstacles qu'ils ne peuvent couper ou broyer. Un tel dispositif de fauchage est notamment décrit dans le brevet français FR 2 944 182.

En outre, dans le document précité, les supports axiaux et les orifices de montages présentent des formes s'adaptant l'une dans l'autre lorsque l'outil est dans sa position de travail de sorte à favoriser le maintien de l'outil en position de travail. Ce document divulgue une grande variété de formes de supports axiaux aptes à s'emboîter dans une portion complémentaire de l'orifice de montage, par exemple globalement triangulaire ou octogonale. De tels supports axiaux et orifices de montages permettent de garantir un positionnement optimum de l'outil dans sa position de travail par rapport aux montages dans lesquels les supports axiaux sont de section circulaire et les orifices de montage oblongs. Ce montage permet donc un retour plus rapide des outils vers leur position de travail en limitant les oscillations des outils autour de leur position de travail.

Il a toutefois été constaté que de tels supports axiaux et orifices de montage étaient soumis à une usure et à un matage rapide qui nuit à la durée de vie du dispositif de fauchage ou de broyage ainsi réalisé.

### Résumé

Une idée à la base de l'invention est de proposer un dispositif de fauchage ou de broyage du type précité qui permette de garantir la stabilité de la position de travail des outils et qui présente une résistance à l'usure satisfaisante.

Selon un mode de réalisation, l'invention fournit un dispositif de fauchage ou de broyage comportant un arbre rotatif portant une pluralité d'outils de fauchage ou de broyage faisant fléaux, chaque outil étant monté directement ou indirectement sur l'arbre rotatif par l'intermédiaire d'au moins une liaison articulée à positionnement préférentiel ; la ou chaque liaison articulée à positionnement préférentiel comportant, d'une part, un orifice de montage et, d'autre part, un support axial passant au travers dudit orifice de montage ; l'orifice de montage étant de section supérieure à celle du support axial de sorte à autoriser un pivotement de l'orifice de montage autour du support axial, le support axial et l'orifice de montage présentant des portions de positionnement aptes à s'adapter l'une dans l'autre lorsque l'outil est dans une position de travail dans laquelle l'outil est disposé radialement et écarté de l'arbre rotatif, de sorte à favoriser le maintien de l'outil en position de travail. La portion de positionnement du support axial présente au moins un bossage cylindrique présentant une surface circulaire convexe et la portion de positionnement de l'orifice de montage présente au moins un logement concave présentant une surface circulaire apte à recevoir la surface circulaire du bossage cylindrique lorsque l'outil est en position de travail, la surface circulaire du logement concave présentant une courbure constante sur une périphérie plus grande qu'un quart de cercle, la surface circulaire du bossage cylindrique présentant une courbure constante complémentaire à la surface circulaire du logement concave sur une périphérie plus grande qu'un quart de cercle.

Ainsi, un tel dispositif est équipé d'une liaison articulée à positionnement préférentiel qui permette d'assurer la stabilité de la position de travail.

On notera que le terme de « liaison articulée à positionnement préférentiel » est ici utilisé pour désigner une liaison dans laquelle le support axial et l'orifice de montage présentent des portions de positionnement de formes complémentaires qui assurent un positionnement relatif stable de l'outil dans sa position de travail jusqu'à ce qu'un effort s'exerçant sur l'outil atteigne une valeur seuil suffisante pour déséquilibrer ce positionnement relatif. En ce sens, on peut également parler d'une liaison assurant sous l'effet de la rotation de l'arbre une précontrainte entre le support axial et l'orifice de montage, c'est-à-dire créant des efforts internes s'exerçant entre le support axial et l'orifice de montage qui tendent à maintenir l'outil dans sa position de travail.

De plus, le support axial et l'orifice de montage coopèrent ensemble par l'intermédiaire d'une surface de contact cylindrique de telle sorte que l'usure et le matage des pièces sont limités. En effet, par rapport à des support axiaux et des orifices de montages présentant des portions s'emboîtant l'une dans l'autre dont le section est de forme globalement triangulaire ou octogonale et qui n'offrent par conséquent qu'une surface de contact linéique dès lors que l'outil est escamoté par rapport à sa position de repos, une surface de contact cylindrique permet de disposer d'une surface de contact importante entre l'orifice de montage et le support axial quelle que soit la position de l'outil, ce qui permet de diminuer l'usure et le matage. De plus, en position de repos, les surfaces circulaires coopèrent entre elles sur une périphérie plus grande qu'un quart de cercle de sorte à assurer une surface de contact qui reste importante même lorsque l'outil s'écarte de sa position de travail.

Selon d'autres modes de réalisation avantageux, un tel dispositif peut présenter une ou plusieurs des caractéristiques suivantes :
- La surface circulaire du bossage cylindrique et la surface circulaire du logement concave sont agencées pour guider le pivotement de l'orifice de montage autour du support axial par rapport à la position de repos ;
- La portion de positionnement du support axial présente deux bossages cylindriques présentant une surface circulaire convexe et la portion de positionnement de l'orifice de montage présente deux logement concaves présentant chacun une surface circulaire apte à recevoir la surface circulaire de l'un ou l'autre des deux bossages cylindriques lorsque l'outil est en position de travail, la surface circulaire de chaque logement concave présentant une courbure constante sur une périphérie plus grande qu'un quart de cercle, la surface circulaire des deux bossages cylindriques présentant respectivement une courbure constante complémentaire à la surface circulaire de l'un et l'autre des logements concaves sur une périphérie plus grande qu'un quart de cercle.
- La surface circulaire de l'un des bossages cylindrique et la surface circulaire du logement concave respectif sont agencées pour guider le pivotement de l'orifice de montage autour du support axial, dans une première zone de débattement de l'orifice de montage autour du support axial et la surface circulaire de l'autre des bossages cylindriques et la surface circulaire du logement concave respectif sont agencés pour guider le pivotement de l'orifice de montage autour du support axial dans une seconde zone de débattement ; la première et la seconde zone de débattement correspondant respectivement à un pivotement de l'orifice de montage du support axiale de part et d'autre de la position de travail.
- Dans un mode de réalisation, les deux bossages cylindriques sont jointifs. En d'autres termes, les rayons de courbure des surfaces circulaires des deux bossages cylindriques sont tels que les deux bossages cylindriques se touchent et s'étendent sur sensiblement toute la surface de contact entre l'orifice de montage et le support axial.
- Dans un mode de réalisation, les surfaces circulaires des deux bossages cylindriques présentent des rayons de courbures identiques. L'orifice de montage et le support axial présentent chacun un axe de symétrie de telle sorte que le dispositif peut être utilisé de manière identique quel que soit le sens de rotation de l'arbre rotatif.
- Dans un autre mode de réalisation, les surfaces circulaires des deux bossages cylindriques présentent des rayons de courbure différents. Un tel mode de réalisation est particulièrement approprié pour un équipement dans lequel l'arbre rotatif n'est entraîné que selon un seul sens de rotation. Les bossages et leurs logements sont alors disposés dans un sens ou dans l'autre suivant la direction de rotation de l'arbre portant les outils. Ainsi, lorsque l'arbre rotatif est destiné à être entraîné en rotation selon un premier sens de rotation, la liaison articulée à positionnement préférentiel est agencée de telle sorte que le bossage cylindrique qui présente la surface circulaire ayant le rayon de courbure le plus important soit positionné devant l'autre bossage cylindrique dans la direction d'avance lorsque l'arbre rotatif est entraîné en rotation selon ledit premier sens de rotation.
- L'orifice de montage comporte une nervure située entre les deux logements concaves apte à se loger dans un creux ménagé entre les deux bossages cylindriques du support axial lorsque l'outil est en position de travail.
- Dans un mode de réalisation, le support axial comporte deux tiges cylindriques placées côte à côte, qui forment les deux bossages cylindriques de la portion de positionnement du support axial.
- Selon un mode de réalisation, un support axial d'au moins une liaison articulée à positionnement préférentiel est porté par deux chapes fixées à l'arbre rotatif.
- Dans un autre mode de réalisation, les deux bossages cylindriques de la portion de positionnement du support axial sont formés dans une même pièce.
- La surface circulaire du logement concave présente une courbure constante complémentaire à la surface circulaire du bossage cylindrique sur une périphérie se développant sur un angle compris entre 110 et 130°.
- Dans un mode de réalisation, l'outil est monté sur l'arbre par l'intermédiaire d'une manille et la manille est liée à l'outil ou à l'arbre par l'intermédiaire d'une liaison articulée à positionnement préférentiel.
- Dans un autre mode de réalisation avantageux, la manille est liée à l'outil par l'intermédiaire d'une liaison articulée à positionnement préférentiel et liée à l'arbre par l'intermédiaire d'une autre liaison articulée à positionnement préférentiel. Selon une variante, le support axial porté par l'arbre rotatif ainsi que le support axial porté par la manille ont sensiblement la même forme. De même, l'orifice de montage de la manille et l'orifice de montage de l'outil ont sensiblement la même forme.
- Le support axial est de forme générale non circulaire.
- Dans un mode de réalisation, l'outil est directement monté sur l'arbre rotatif par l'intermédiaire de la liaison articulée à positionnement préférentiel.
- L'outil comporte un couteau et l'orifice de montage d'une liaison articulée à positionnement préférentiel.
- Le support axial de la liaison articulée à positionnement préférentiel est porté par un premier élément choisi parmi l'outil, la manille ou l'arbre rotatif et l'orifice de montage est porté par un second élément, adjacent audit premier élément, choisi parmi l'outil, la manille ou l'arbre rotatif.

Selon un mode de réalisation, l'invention fournit également une machine mobile pour la coupe et/ou le broyage de végétaux telle qu'une faucheuse rotative, une épareuse ou une machine de broyage, équipée d'un dispositif précité.

Outre la coupe et/ou le broyage de végétaux, une telle machine peut présenter d'autres utilisations, telles que le broyage de pierres.

### Brève description des figures

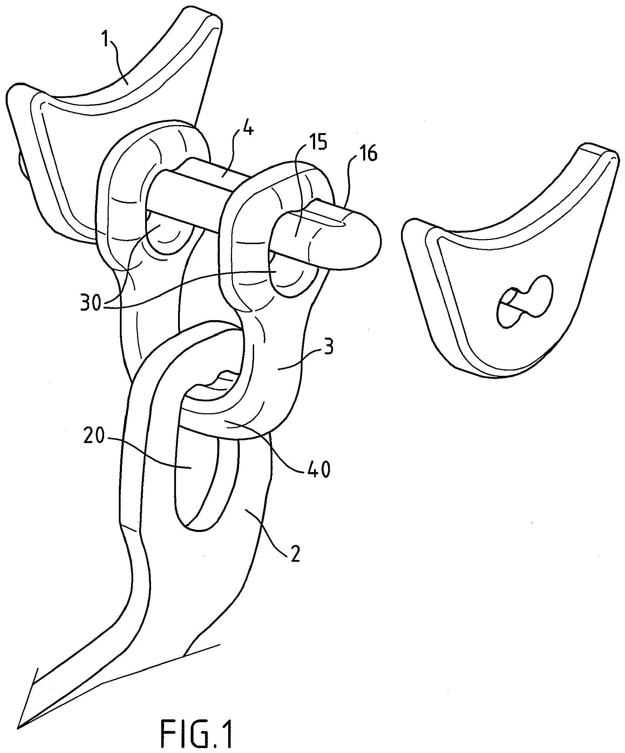

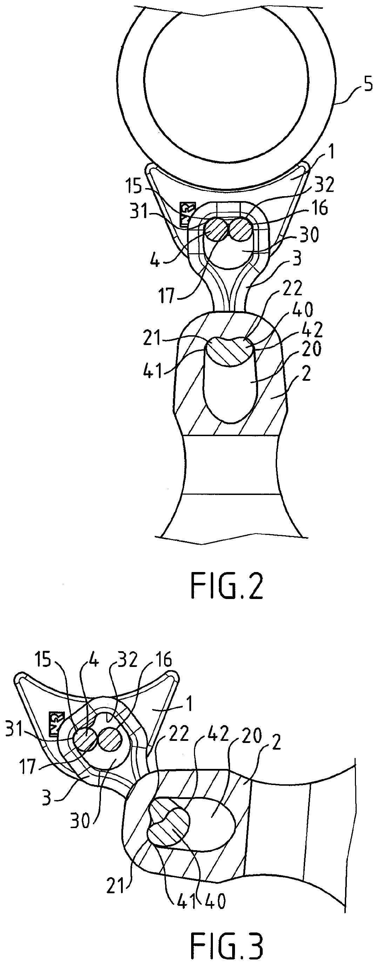

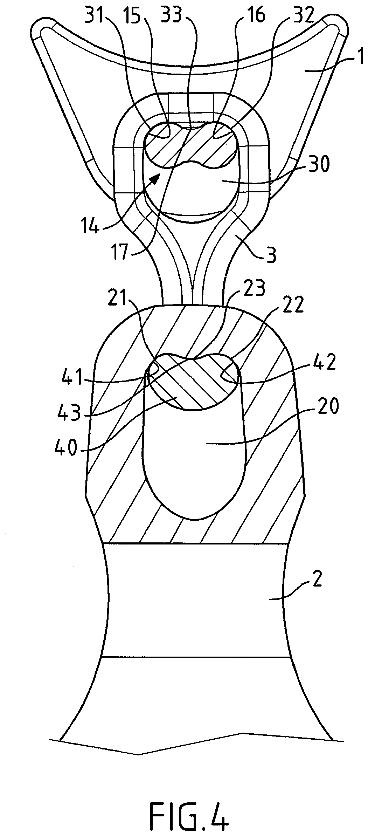

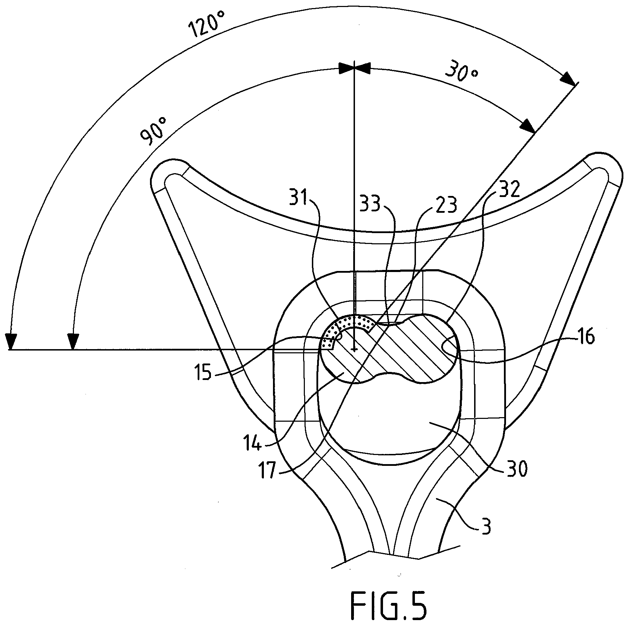

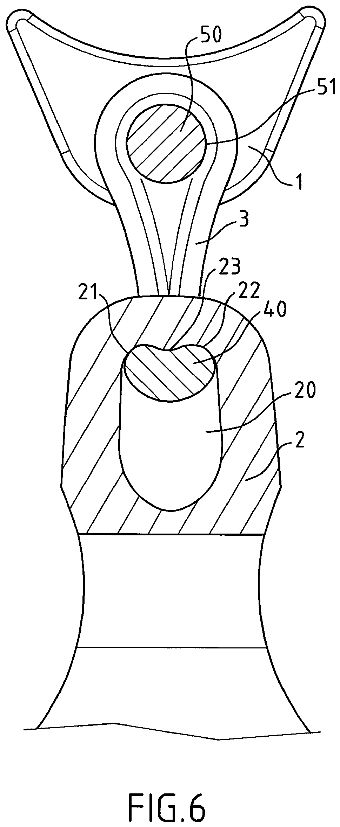

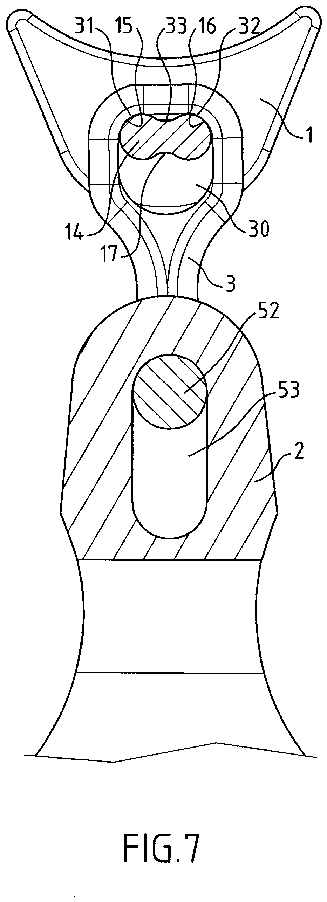

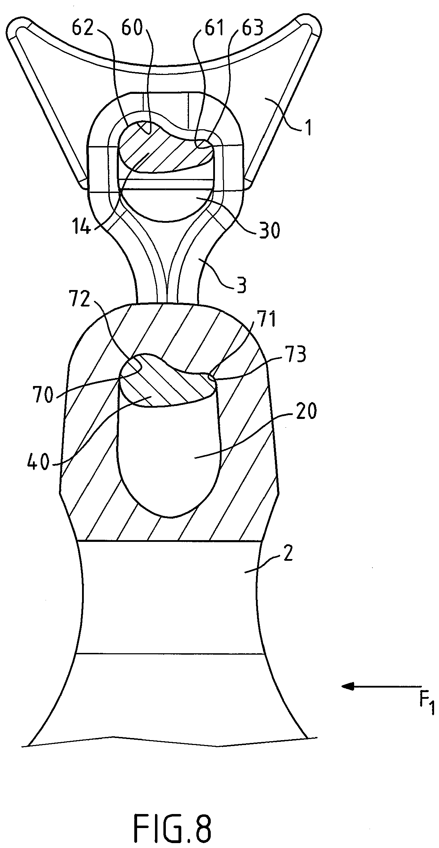

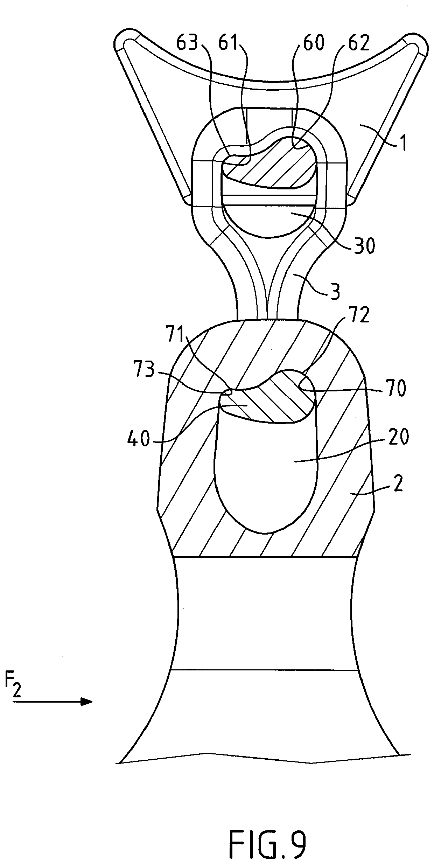

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue partielle en perspective d'un dispositif de fauchage ou de broyage.
- **La** **figure 2** est une vue en coupe du dispositif de la figure 1 dans laquelle l'outil est représenté dans une position de travail et l'arbre rotatif est représenté schématiquement.
- **La** **figure 3** est une vue en coupe du dispositif de la figure 1 dans laquelle l'outil est représenté dans une position escamotée.
- **La** **figure 4** illustre une variante de réalisation du dispositif des figures 1 à 3, l'outil étant représenté en position de travail.
- **La** **figure 5** est une vue de détail d'une partie de la figure 4.
- **La** **figure 6** illustre schématiquement un dispositif selon un second mode de réalisation, l'outil étant représenté en position de travail.
- **La** **figure 7** illustre schématiquement un dispositif selon un troisième mode de réalisation, l'outil étant représenté en position de travail.
- **La** **figure 8** illustre schématiquement un dispositif selon un quatrième mode de réalisation, l'outil étant en position de travail et l'arbre rotatif étant destiné à être entraîne dans un sens horaire.
- **La** **figure 9** représente la disposition du dispositif de la figure 8 lorsque l'arbre rotatif est destiné à être entraîné selon un sens anti-horaire.

### Description détaillée de modes de réalisation

Les figures 1 à 3 représentent un dispositif de fauchage ou de broyage selon un premier mode de réalisation.

Le dispositif comporte une pluralité d'outils 2 de fauchage ou de broyage, dont un seul est ici représenté, qui sont solidarisés à un arbre rotatif 5, généralement creux, représenté sur la figure 2. L'arbre rotatif 5 peut être monté en rotation sur une machine de coupe ou de broyage, selon un axe de rotation horizontal, vertical ou oblique.

L'outil 2 est solidarisé à l'arbre rotatif 5 soit directement soit par l'intermédiaire d'une manille 3, comme dans le mode de réalisation représenté. L'outil 2 est monté articulé par rapport à l'arbre rotatif 5 de sorte à être apte à se positionner sous l'effet de la force centrifuge engendré par la rotation de l'arbre rotatif dans une position de travail dans laquelle il est disposé radialement par rapport à l'arbre rotatif 5 et à s'escamoter en s'écartant de sa position de travail lorsqu'il rencontre un obstacle. L'outil 2 comporte un couteau qui constitue une partie travaillante munie de portions biseautées permettant de couper ou de broyer des végétaux ou des pierres.

Sur les figures 1 à 3, l'outil 2 est porté par la manille 3 et comporte à cet effet un orifice de montage 20 au travers duquel passe un support axial 40 porté par la manille 3. La manille 3 est quant à elle reliée à l'arbre rotatif 5 par l'intermédiaire de deux orifices de montage 30 de la manille 3 au travers desquelles passent un support axial 4 fixé à l'arbre rotatif 5. Le support axial 4 s'étend parallèlement à l'axe de rotation de l'axe rotatif 5 et est porté par deux chapes 1 qui sont fixées à l'arbre rotatif 5. Le support axial 4 est monté à travers de perçages ménagés dans lesdites chapes 1.

Sur les figures 1 à 3, le support axial 4 porté par l'arbre rotatif 5 comporte deux tiges cylindriques disposées côte-à-côte et formant chacune un bossage cylindrique et circulaire 15, 16. Dans la variante de réalisation représentée sur la figure 4, le support axial 4 est formé d'une seule pièce monobloc qui présente deux bossages cylindriques 15, 16, dirigés radialement vers l'intérieur, c'est-à-dire vers l'arbre rotatif 5, et présentant des surfaces circulaires convexes. Pour ces deux variantes de réalisation, le support axial 4 ou 14 comporte un creux 17 entre les deux bossages 15, 16.

Les orifices de montage 30 de la manille 3 présentent des dimensions légèrement plus grandes que celle du support axial 4 ou 14 de sorte à permettre un pivotement de la manille 3 autour du support axial, notamment lorsque l'outil 1 rencontre un obstacle. Par ailleurs, les orifices de montage 30 de la manille 3 comportent chacun deux logements concaves 31, 32 ménagés au niveau de leur bord radialement interne. Chaque logement concave 31, 32 présente une surface circulaire qui est apte à recevoir la surface circulaire d'un bossage cylindrique 15, 16 respectif lorsque l'outil 2 est dans sa position de travail. La surface circulaire de chacun des logements concaves 31, 32 présente une courbure constante complémentaire à la surface circulaire du bossage cylindrique 15, 16 associé. La zone des orifices de montage 30 qui sépare les deux logements 31 et 32 comporte une nervure 33 qui a une forme complémentaire de celle du creux 17 formé entre les deux bossages 15, 16 du support axial 4, 14.

On comprend ainsi que les orifices de montage 30 de la manille 3 et le support axial 14 porté par l'arbre rotatif 5 constitue une liaison mobile à positionnement préférentiel, les bossages cylindriques 15, 16 et les logements concaves 31, 32 formant des portions de positionnement aptes à s'adapter les unes dans les autres lorsque l'outil 2 est dans sa position de travail de sorte à favoriser le positionnement de l'outil 2 dans cette position de travail. De plus, des surfaces de contact cylindriques permettent de guider le mouvement de pivotement de la manille 3 autour du support axial 4 ou 14.

Comme illustré sur la figure 5, chaque logement concave 31, 32 présente une surface circulaire qui comporte une courbure constante complémentaire de la surface circulaire du bossage cylindrique 15, 16 associé sur un angle de plus de 90° et de préférence sur un angle compris entre 110 et 130°, par exemple de l'ordre de 120°. Une telle coopération entre l'orifice de montage 30 et le support axial 14 permet d'obtenir des surfaces de contact cylindriques de grandes dimensions de manière à limiter l'usure et le matage des pièces.

De même, l'orifice de montage 20 de l'outil 2 forme avec le support axial 40 porté par la manille 3 une liaison articulée à positionnement préférentiel présentant une structure similaire à celle de la liaison décrite-ci-dessus entre la manille 3 et l'arbre rotatif 5.

En effet, l'orifice de montage 20 de l'outil 2 comporte sur son bord radialement interne deux logements concaves 21, 22 présentant une surface circulaire. Entre les deux logements 21 et 22 est disposée une nervure 23. La manille 3 comporte un support axial 40 traversant l'orifice 20. Les dimensions du support axial 40 sont inférieures à celles de l'orifice de montage 20 de l'outil 2 de sorte à permettre un pivotement de l'outil 2 autour du support axial 40.

Par ailleurs, le support axial 40 comporte deux bossages 41 et 42 partiellement cylindriques, qui ont une forme complémentaire à celle des logements 21 et 22 de l'orifice de montage 20 de façon à venir s'y loger lorsque l'outil est en position de travail. Entre les deux bossages 41 et 42, l'axe 40 comporte un creux 43 qui a une forme complémentaire à celle de la nervure 23.

De même que dans les cas des bossages 15 et 16 et des logements 31 et 32, chaque logement concave 21, 22 présente une surface circulaire qui présente une courbure constante complémentaire de la surface circulaire du bossage cylindrique 41, 42 associé sur un angle de plus de 90° et de préférence sur un angle compris entre 110 et 130°, par exemple de l'ordre de 120°.

Le fonctionnement du dispositif ainsi décrit est le suivant. Lorsque l'arbre rotatif 5 de la machine de fauchage ou de broyage tourne à grande vitesse, la manille 3 et l'outil 2 prennent, sous l'effet de la force centrifuge, la position de travail représentée aux figures 1, 2, 4 et 5.

Lorsque l'outil 2 rencontre une végétation trop dense, celle-ci exerce sur l'outil 2 un effort suffisant pour déséquilibrer l'outil 2 hors de sa position de travail et entraîner un escamotage de la manille 3 et de l'outil 2, comme cela est représenté à la figure 3. L'outil 2 peut également rencontrer une pierre, une souche ou une branche trop épaisse qui constitue un obstacle contre lequel vient buter l'outil 2 et qui entraîne un escamotage de la manille 3 et de l'outil par rapport à leur position de travail.

Grâce aux formes complémentaires des bossages 15, 16, 41, 42 des logements 21, 22, 31, 32 et des nervures 23, 33 pénétrant dans les creux 17, 41, ces élément ont une prédisposition à s'emboiter les uns dans les autres lorsque l'outil 2 est en position de travail ; ce qui confère au dispositif une stabilité importante et permet un retour rapide des éléments vers leur position de travail après un escamotage.

En se reportant à la figure 3, l'on observe qu'un mode de réalisation dans lequel l'outil 2 est associé à l'arbre rotatif 5 par l'intermédiaire d'une manille 3 permet un double escamotage puisque l'outil 2 a pivoté autour du support axial 40 porté par la manille 3 et que la manille 3 a pivoté autour du support axial 4 porté par l'arbre rotatif 5.

Par ailleurs, dans un mode réalisation non illustré, l'outil 1 est solidarisé directement au support axial 4 ou 14 porté par l'arbre rotatif 5, c'est-à-dire sans l'aide d'une manille 3, le support axial 4 ou 14 sert alors de support à l'outil 2 et est par conséquent introduit à travers l'orifice de montage 20 de l'outil 2. Les bossages cylindriques 15, 16 du support axial 4 ou 14 sont alors de forme complémentaire à celle des logements concaves 21, 21 ménagés dans l'orifice de montage 20 de l'outil 2.

Les figures 6 et 7 représentent des dispositifs respectivement selon un second et un troisième modes de réalisation. Dans ces modes de réalisation, seule la liaison de l'outil 2 à la manille 3 ou la liaison de la manille 3 à l'arbre rotatif 5 est obtenue au moyen d'une liaison articulée à positionnement préférentiel telle que décrite ci-dessus.

Ainsi, sur la figure 6, le support axial porté par les chapes 1 fixées à l'arbre rotatif 5 est une simple tige cylindrique 50 et les orifices de montage de la manille 3 sont de simples orifices circulaires 51 au travers desquels passe la tige cylindrique 50.

Sur la figure 7 c'est la liaison entre la manille 3 et l'outil 2 qui est simplifiée. Ainsi, le support axial de la manille 3 est une tige cylindrique 52 et l'orifice de montage 20 de l'outil 2 est une ouverture de forme oblongue 53 à l'intérieur de laquelle passe la tige cylindrique 52.

Dans tous les modes de réalisation décrits ci-dessus, pour chaque liaison articulée à positionnement préférentiel, les deux logements concaves 21, 22, 31, 32 et les deux bossages cylindriques 15, 16, 41, 42 sont symétriques ce qui permet d'obtenir des surfaces de contact entres les orifices de montages 23, 30 et les support axiaux 4, 14, 40 qui présentent des dimensions identiques, et cela que l'outil 2 pivote dans un sens ou dans l'autre. De tels dispositifs auront donc un fonctionnement identique quel que soit le sens de rotation de l'arbre rotatif.

Le mode de réalisation représenté sur les figures 8 et 9 diffère du mode de réalisation des figures 4 et 5 en ce que les surfaces cylindriques des deux bossages cylindriques 60, 61, 70, 71 de chaque support axial 14, 40, d'une part, et les surfaces cylindrique des logements concaves 62, 63, 72, 73 de chaque orifice de montage 30, 20, d'autre part, sont dissymétriques et présentent des rayons de courbures différents. Un tel agencement permet d'allouer une surface cylindrique de contact plus importante aux bossages cylindriques 60, 70 et aux logements concaves 62, 72 qui seront les plus sollicités lors du pivotement de l'outil 2 entre sa position de travail et une position escamotée.

Ainsi, selon que l'arbre rotatif 5 soit destiné à être entraîné en rotation dans le sens horaire, représenté par la flèche F1 sur la figure 8, ou dans un sens anti-horaire représenté par la flèche F2 sur la figure 9, la disposition des éléments du dispositif sera inversée. On observe ainsi, sur les figures 8 et 9, que pour allouer la surface de contact la plus importante aux bossages cylindriques 60, 70 et aux logements concaves 62, 72 qui seront les plus sollicités, les éléments du dispositif sont orientés de telle sorte que les bossages cylindriques 60, 70 et les logements concaves 62, 72 qui présentent les surfaces circulaires ayant les rayons de courbure les plus importants sont positionnés vers l'avant par rapport aux autres bossages cylindriques 61, 71 et logements concaves 63, 73 dans la direction d'avance circonférentielle.

Notons également que, dans un mode de réalisation non représenté, une ou chaque liaison articulée à positionnement préférentiel pourra présenter un support axial dont la portion de positionnement apte à s'adapter l'une dans l'autre avec la portion de positionnement de l'orifice de montage ne pourra présenter qu'un seul bossage cylindrique ayant une surface circulaire, l'autre ou les autres bossages présentant une forme quelconque. Dans un tels cas, le bossage cylindrique étant alors disposé à l'avant du support axial selon la direction d'avance de l'arbre rotatif lorsque celui-ci est entraîné en rotation.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

En particulier, notons que dans d'autres modes de réalisation non représenté, il peut être envisagé d'inverser la structure des éléments de telle sorte que, d'une part, l'outil comporte un support axial et non un orifice de montage, et que l'élément de liaison porté par l'arbre rotatif présente un orifice de montage et non un support axial.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout signe de référence entre parenthèses ne saurait être interprété comme une limitation de la revendication.

## Revendications

1. Dispositif de fauchage ou de broyage comportant un arbre rotatif (5) portant une pluralité d'outils (2) de fauchage ou de broyage faisant fléaux, chaque outil (2) étant monté directement ou indirectement sur l'arbre rotatif (5) par l'intermédiaire d'au moins une liaison articulée à positionnement préférentiel ; la ou chaque liaison articulée à positionnement préférentiel comportant, d'une part, un orifice de montage (20, 30) et, d'autre part, un support axial (4, 14, 40) passant au travers dudit orifice de montage (20, 30) ; l'orifice de montage (20, 30) étant de section supérieure à celle du support axial (4, 14, 40) de sorte à autoriser un pivotement de l'orifice de montage (20, 30) autour du support axial (4, 14, 40) ; le support axial (4, 14, 40) et l'orifice de montage (20, 30) présentant des portions de positionnement aptes à s'adapter l'une dans l'autre lorsque l'outil est dans une position de travail dans laquelle l'outil est disposé radicalement et écarté de l'arbre rotatif (5), de sorte à favoriser le maintien de l'outil en position de travail ; la portion de positionnement du support axial (4, 14, 40) présente au moins un bossage cylindrique (15, 16, 41, 42, 60, 61, 70, 71) présentant une surface circulaire convexe et la portion de positionnement de l'orifice de montage (20, 30) présente au moins un logement concave (21, 22, 31, 32, 62, 63, 72, 73) présentant une surface circulaire apte à recevoir la surface circulaire du bossage cylindrique (15, 16, 41, 42, 60, 61, 70, 71) lorsque l'outil est en position de travail, ledit dispositif étant **caractérisée en ce que** la surface circulaire du logement concave (21, 22, 31, 32, 62, 63, 72, 73) présente une courbure constante sur une périphérie plus grande qu'un quart de cercle, la surface circulaire du bossage cylindrique (15, 16, 41, 42, 60, 61, 71, 72) présentant une courbure constante complémentaire à la surface circulaire du logement concave sur une périphérie plus grande qu'un quart de cercle.

2. Dispositif selon la revendication 1, dans lequel la portion de positionnement du support axial (4, 14, 40) présente deux bossages cylindriques (15, 16, 41, 42, 60, 61, 70, 71) présentant une surface circulaire convexe et la portion de positionnement de l'orifice de montage (20, 30) présente deux logement concaves (21, 22, 31, 32, 62, 63, 72, 73) présentant chacun une surface circulaire apte à recevoir la surface circulaire de l'un ou l'autre des deux bossages cylindriques lorsque l'outil est en position de travail, la surface circulaire de chaque logement concave présentant une courbure constante sur une périphérie plus grande qu'un quart de cercle, la surface circulaire des deux bossages cylindriques présentant respectivement une courbure constante complémentaire à la surface circulaire de l'un et l'autre des logements concaves sur une périphérie plus grande qu'un quart de cercle.

3. Dispositif selon la revendication 2 dans lequel les deux bossages cylindriques (15, 16, 41, 42, 60, 61, 70, 71) sont jointifs.

4. Dispositif selon la revendication 2 ou 3, dans lequel les surfaces circulaires des deux bossages cylindriques (15, 16, 41, 42) présentent des rayons de courbures identiques.

5. Dispositif selon la revendication 2 ou 3, dans lequel les surfaces circulaires des deux bossages cylindriques (60, 61, 70, 71) présentent des rayons de courbure différents.

6. Dispositif selon la revendication 5, dans lequel l'arbre rotatif (5) est destiné à être entraîné en rotation selon un premier sens de rotation et dans lequel la liaison articulée à positionnement préférentiel est agencée de telle sorte que le bossage cylindrique (60, 70) qui présente la surface circulaire ayant le rayon de courbure le plus important soit positionné devant l'autre bossage cylindrique (61, 71) dans la direction d'avance lorsque l'arbre rotatif (5) est entraîné en rotation selon ledit premier sens de rotation.

7. Dispositif selon l'une quelconque des revendications 2 à 6, dans lequel l'orifice de montage (20, 30) comporte une nervure (23, 33) située entre les deux logements concaves (21, 22, 41, 42) apte à se loger dans un creux (17) ménagé entre les deux bossages cylindriques (15, 16) du support axial (14, 40) lorsque l'outil (2) est en position de travail.

8. Dispositif selon l'une quelconque des revendications 2 à 7, dans lequel le support axial (4) comporte deux tiges cylindriques placées côte à côte, qui forment les deux bossages cylindriques (15, 16) de la portion de positionnement du support axial (4).

9. Dispositif selon l'une quelconque des revendications 2 à 7, dans lequel les deux bossages cylindriques (41, 42, 60, 61, 70, 71) de la portion de positionnement du support axial (14, 40) sont formés dans une même pièce.

10. Dispositif selon l'une quelconque des revendications 1 à 9, dans lequel la surface circulaire du logement concave (21, 22, 31, 32) présente une courbure constante complémentaire à la surface circulaire du bossage cylindrique (15, 16, 41, 42) associé sur une périphérie se développant sur un angle compris entre 110 et 130°.

11. Dispositif selon l'une quelconque des revendications 1 à 10, dans lequel l'outil est monté sur l'arbre par l'intermédiaire d'une manille (3) et dans lequel la manille (3) est liée à l'outil (2) et/ou à l'arbre rotatif (5) par l'intermédiaire d'une liaison articulée à positionnement préférentiel.

12. Dispositif selon l'une quelconque des revendications 1 à 10, dans lequel l'outil (2) est directement monté sur l'arbre rotatif (5) par l'intermédiaire de la liaison articulée à positionnement préférentiel.

13. Dispositif selon l'une quelconque des revendications 1 à 11, dans lequel l'outil (2) comporte un couteau et l'orifice de montage (20) d'une liaison articulée à positionnement préférentiel.

## Patentansprüche

1. Mäh- oder Zerkleinerungsvorrichtung umfassend eine rotierende Welle (5), auf welcher ein Vielzahl von Werkzeugen (2) zum Mähen oder Zerkleinern in Form von Dreschen angeordnet sind, wobei jedes Werkzeug (2) entweder direkt oder indirekt durch eine Gelenkverbindung in fortschreitender Positionierung auf der rotierenden Welle angebracht ist; wobei die oder jede Gelenkverbindung mit fortschreitender Positionierung zum einen eine Befestigungsöffnung (20,30) und zum anderen einen die Befestigungsöffnung durchquerenden Axialträger (4, 14, 40) umfasst; wobei die Befestigungsöffnung (20, 30) einen größeren Querschnitt als der Axialträger (4, 14, 49) aufweist, so dass eine Drehung der Befestigungsöffnung (20, 30) um den Axialträger (4, 14, 40) herum möglich ist; wobei der Axialträger (4, 14, 40) und die Befestigungsöffnung (20, 30) Positionierungsabschnitte aufweisen, die es ermöglichen, dass sich das eine in das andere fügt, wenn das Werkzeug in einer Arbeitsstellung ist, in der das Werkzeug radial und beabstandet von der rotierenden Welle angeordnet ist, um den Verbleib des Werkzeuges in der Arbeitsstellung zu begünstigen; wobei der Positionierungsabschnitt des Axialträgers (4, 14, 40) mindestens eine zylindrische Nocke (15, 16, 41, 42, 60, 61, 70, 71) mit einer konvexen kreisförmigen Oberfläche und der Positionierungsabschnitt der Befestigungsöffnung (20, 30) mindestens eine konkave Aufnahmeanordnung (21, 22, 31, 32, 62, 63, 72, 73) mit einer kreisförmigen Oberfläche aufweist, welche die kreisförmige Oberfläche der zylindrischen Nocke (15, 16, 41, 42, 60, 61, 70, 71) aufnehmen kann, wenn das Werkzeug in Arbeitsstellung ist, wobei die Vorrichtung **dadurch gekennzeichnet ist, dass** die kreisförmige Oberfläche der konkaven Aufnahmeanordnung (21, 22, 31, 32, 62, 63, 72, 73)
in einer Peripherie eine konstante Krümmung, welche größer ist als ein Viertelkreis, aufweist, wobei die kreisförmige Oberfläche der zylindrischen Nocke (15, 16, 41, 42, 60, 61, 71, 72) eine zur kreisförmigen Oberfläche der konkaven Aufnahmeanordnung komplementäre konstante Krümmung, welche größer ist als ein Viertelkreis, in einer Peripherie aufweist.

2. Vorrichtung gemäß Anspruch 1, wobei der Positionierungsabschnitt des Axialträgers (4, 14, 40) zwei zylindrische Nocken (15, 16, 41, 42, 60, 61, 70, 71) mit einer konvexen kreisförmigen Oberfläche und der Positionierungsabschnitt der Befestigungsöffnung (20, 30) zwei konkave Aufnahmeanordnungen (21, 22, 31, 32, 62, 63, 72, 73) mit jeweils einer kreisförmigen Oberfläche aufweist, welche die kreisförmige Oberfläche der einen oder der anderen der beiden zylindrischen Nocken aufnehmen kann, wenn das Werkzeug in Arbeitsstellung ist; wobei die kreisförmige Oberfläche jeder konkaven Aufnahmeanordnung in einer Peripherie, welche größer als ein Viertelkreis ist, eine konstante Krümmung aufweist, wobei die kreisförmige Oberfläche der zwei zylindrischen Nocken in einer Peripherie, welche größer ist als ein Viertelkreis, jeweils eine konstante, zur kreisförmigen Oberfläche der einen oder der anderen konkaven Aufnahmeanordnung komplementäre Krümmung aufweist.

3. Vorrichtung gemäß Anspruch 2, wobei die beiden zylindrischen Nocken (15, 16, 41, 42, 60, 61, 70, 71) nebeneinander liegen.

4. Vorrichtung gemäß Anspruch 2 oder 3, wobei die kreisförmigen Oberflächen der zwei zylindrischen Bolzen (15, 16, 41, 42) identische Krümmungsradien aufweisen.

5. Vorrichtung gemäß Anspruch 2 oder 3, wobei die kreisförmigen Oberflächen der zwei zylindrischen Bolzen (60, 61, 70, 71) unterschiedliche Krümmungsradien aufweisen.

6. Vorrichtung gemäß Anspruch 5, wobei die rotierende Welle (5) drehbar gemäß einer ersten Rotationsrichtung ist und wobei die Gelenkverbindung mit fortschreitender Positionierung derart angeordnet ist, dass die zylindrische Nocke (60,70), welche die kreisförmige Oberfläche mit dem größeren Krümmungsradius aufweist, vor der anderen zylindrischen Nocke (61,71) in Vorwärtsrichtung angeordnet ist, wenn die rotierende Welle (5) gemäß der ersten Rotationsrichtung in Rotation ist.

7. Vorrichtung gemäß einem der Ansprüche 2 bis 6, wobei die Befestigungsöffnung (20, 30) eine zwischen den beiden konkaven Aufnahmeanordnungen (21, 22, 41, 42) angeordnete Rippe (23, 33) umfasst, welche während der Arbeitsstellung des Werkzeuges in einer zwischen den zwei zylindrischen Nocken (15, 16) des Axialträgers (14, 40) angeordneten Aussparung (17) einfügbar ist.

8. Vorrichtung gemäß einem der Ansprüche 2 bis 7, wobei der Axialträger (4) zwei nebeneinanderliegende zylindrische Stifte umfasst, welche die beiden zylindrischen Nocken (15, 16) des Positionierungsabschnittes des Axialträgers (4) bilden.

9. Vorrichtung gemäß einem der Ansprüche 2 bis 7, wobei die zwei zylindrischen Nocken (41, 42, 60, 61, 70, 71) des Positionierungsabschnittes des Axialträgers (14, 40) einstückig ausgebildet sind.

10. Vorrichtung gemäß einem der Ansprüche 1 bis 9, wobei die kreisförmige Oberfläche der konkaven Aufnahmeanordnung (21, 22, 31, 32) eine konstante, zur kreisförmigen Oberfläche des dazugehörigen zylindrischen Nockens (15, 16, 41, 42) komplementäre Krümmung aufweist, auf einem sich in einem Winkel zwischen 110 und 130° erstreckenden Außenbereich.

11. Vorrichtung gemäß einem der Ansprüche 1 bis 10, wobei das Werkzeug auf der Welle mittels eines Bügels (3) angebracht ist und wobei der Bügel (3) mittels einer Gelenkverbindung mit fortschreitender Positionierung an dem Werkzeug (2) und/oder der rotierenden Welle (5) angebracht ist.

12. Vorrichtung gemäß einem der Ansprüche 1 bis 10, wobei das Werkzeug (2) unmittelbar mittels einer Gelenkverbindung mit fortschreitender Positionierung auf der rotierenden Welle (5) angebracht ist.

13. Vorrichtung gemäß einem der Ansprüche 1 bis 11, wobei das Werkzeug (2) ein Messer und die Befestigungsöffnung (20) einer Gelenkverbindung mit fortschreitender Positionierung umfasst.

## Claims

1. A mowing or grinding device comprising a rotatable shaft (5) which carries a plurality of mowing or grinding tools (2) which form flails, each tool (2) being mounted directly or indirectly on the rotatable shaft (5) by means of at least one hinged connection with preferred positioning; the or each hinged connection with preferred positioning comprising, on the one hand, a mounting aperture (20, 30) and, on the other hand, an axial support (4, 14, 40) which passes through said mounting aperture (20, 30); the mounting aperture (20, 30) being greater in section than that of the axial support (4, 14, 40) so as to allow the mounting aperture (20, 30) to pivot around the axial support (4, 14, 40); the axial support (4, 14, 40) and the mounting aperture (20, 30) having positioning portions which are able to fit into one another when the tool is in an operating position in which the tool is arranged radially and has been moved away from the rotatable shaft (5), so as to favor keeping the tool in the operating position; the positioning portion of the axial support (4, 14, 40) has at least one cylindrical boss (15, 16, 41, 42, 60, 61, 70, 71) which has a convex circular surface and the positioning portion of the mounting aperture (20, 30) has at least one concave housing (21, 22, 31, 32, 62, 63, 72, 73) which has a circular surface which is capable of receiving the circular surface of the cylindrical boss (15, 16, 41, 42, 60, 61, 70, 71) when the tool is in the operating position, said device being **characterized in that** the circular surface of the concave housing (21, 22, 31, 32, 62, 63, 72, 73) has a constant curve over a periphery which is greater than a quarter circle, the circular surface of the cylindrical boss (15, 16, 41, 42, 60, 61, 71, 72) having a constant curve which is complementary to the circular surface of the concave housing over a periphery which is greater than a quarter circle.

2. The device as claimed in claim 1, in which the positioning portion of the axial support (4, 14, 40) has two cylindrical bosses (15, 16, 41, 42, 60, 61, 70, 71) which have a convex circular surface and the positioning portion of the mounting aperture (20, 30) has two concave housings (21, 22, 31, 32, 62, 63, 72, 73) which each have a circular surface which is capable of receiving the circular surface of the one or the other of the two cylindrical bosses when the tool is in the operating position, the circular surface of each concave housing having a constant curve over a periphery which is greater than a quarter circle, the circular surface of the two cylindrical bosses having respectively a constant curve which is complementary to the circular surface of the one and the other of the concave housings over a periphery which is greater than a quarter circle.

3. The device as claimed in claim 2, in which the two cylindrical bosses (15, 16, 41, 42, 60, 61, 70, 71) are contiguous.

4. The device as claimed in claim 2 or 3, in which the circular surfaces of the two cylindrical bosses (15, 16, 41, 42) have identical radii of curvature.

5. The device as claimed in claim 2 or 3, in which the circular surfaces of the two cylindrical bosses (60, 61, 70, 71) have different radii of curvature.

6. The device as claimed in claim 5, in which the rotatable shaft (5) is intended to be rotated in a first direction of rotation and in which the hinged connection with preferred positioning is arranged such that the cylindrical boss (60, 70) which has the circular surface having the largest radii of curvature is positioned in front of the other cylindrical boss (61, 71) in the running direction when the rotatable shaft (5) is rotated in said first direction of rotation.

7. The device as claimed in any one of claims 2 to 6, in which the mounting aperture (20, 30) comprises a rib (23, 33) which is situated between the two concave housings (21, 22, 41, 42) and is capable of being accommodated in a hollow (17) which is arranged between the two cylindrical bosses (15, 16) of the axial support (14, 40) when the tool (2) is in the operating position.

8. The device as claimed in any one of claims 2 to 7, in which the axial support (4) comprises two cylindrical rods which are placed side by side and which form the two cylindrical bosses (15, 16) of the positioning portion of the axial support (4).

9. The device as claimed in any one of claims 2 to 7, in which the two cylindrical bosses (41, 42, 60, 61, 70, 71) of the positioning portion of the axial support (14, 40) are formed in a same part.

10. The device as claimed in any one of claims 1 to 9, in which the circular surface of the concave housing (21, 22, 31, 32) has a constant curve which is complementary to the circular surface of the associated cylindrical boss (15, 16, 41, 42) over a periphery which develops at an angle of between 110 and 130° inclusive.

11. The device as claimed in any one of claims 1 to 10, in which the tool is mounted on the shaft by means of a shackle (3) and in which the shackle (3) is connected to the tool (2) and/or to the rotatable shaft (5) by means of a hinged connection with preferred positioning.

12. The device as claimed in any one of claims 1 to 10, in which the tool (2) is mounted directly on the rotatable shaft (5) by means of the hinged connection with preferred positioning.

13. The device as claimed in any one of claims 1 to 11, in which the tool (2) comprises a cutter and the mounting aperture (20) a hinged connection with preferred positioning.
